# EUROPEAN PATENT SPECIFICATION

(11) **EP 2 874 796 B1**
(45) Date of publication and mention of the grant of the patent: **21.10.2015**
(21) Application number: 13731725.1
(22) Date of filing: 19.06.2013
(51) Int. Cl.: B65B 29/02, B65B 47/04, B29C 51/08, B29C 51/26, B29K 23/00, B29K 67/00, B29L 31/00

(54) **INFUSION PACKETS AND A PROCESS FOR THEIR MANUFACTURE**
INFUSIONSPAKETE UND VERFAHREN ZU DEREN HERSTELLUNG
PAQUETS D'INFUSION ET PROCÉDÉ POUR LEUR FABRICATION

(30) Priority: 18.07.2012 EP 12176821
(43) Date of publication of application: 27.05.2015
(73) Proprietor: Unilever PLC, London, Greater London EC4Y 0DY (GB); Unilever N.V., 3013 AL Rotterdam (NL)
(72) Inventor: WOODWARD, Adrian, Michael, Bury St Edmonds Suffolk IP32 7PG (GB)
(74) Representative: Askew, Sarah Elizabeth
(86) International application number: PCT/EP2013/062721
(87) International publication number: WO 2014/012731

(56) References cited:
- EP-A1- 0 027 031
- EP-A1- 0 432 126
- WO-A1-2005/047111
- CH-A- 520 559
- GB-A- 2 408 252
- JP-A- 56 080 432
- JP-A- 60 085 924
- US-A- 3 549 381
- US-A- 3 642 967

## Description

### TECHNICAL FIELD

The present invention relates to infusion packets. More particularly, the present invention is directed towards the manufacture of infusion packets (such as tea bags) having a three-dimensional shape.

### BACKGROUND

In the past, conventional infusion packets (e.g. tea bags) have typically been flat, comprising a single chamber filled with infusible material (e.g. leaf tea, herbal mixtures). Such packets are essentially flat and thus restrict the movement of the infusible material within the packet to substantially two dimensions. As a result, the infusion performance of these infusion packets is limited.

US 3,549,381 discloses a tea bag comprising tea leaves enclosed in an impervious, flexible, thermoplastic protective film, at least a portion of said film having a regularly spaced embossed pattern on at least one surface which has been drawn sufficiently to develop a preferential weakness in one direction. The tea bag is impervious until it is stretched by the end user. As the thermoplastic material is stretched, it opens up forming a netlike material. Thus the embossed thermoplastic material is stretched in a first direction during manufacture (to develop a preferential weakness in one direction) and then stretched to some extent in a second direction by the end user (to form a netlike material). Since these tea bags are substantially flat, the movement of the tea leaves enclosed therein is restricted to substantially two dimensions during infusion. Furthermore, since formation of the netlike material relies on the consumer stretching the thermoplastic material, such tea bags will not be as uniform as conventional tea bags. For example, too little stretch may limit the performance of the tea bag due to only a part of the packaging material becoming porous. On the other hand, too much stretch may introduce openings which are large enough to permit leakage of the tea leaves into the beverage itself. Thus the performance of the tea bags disclosed in this document is likely to be far from optimal.

The past few decades have seen the development of infusion packets which have a more three-dimensional shape and which allow greater circulation and mixing of the infusion liquid and the infusible material. Of particular success have been tetrahedral-shaped packets such as those described in WO 04/033303 and WO 95/01907. In the manufacture of tetrahedral packets, the tetrahedral shape is conventionally formed by making mutually perpendicular transverse seals in a tube of filter material. Apparatus designed for such manufacture is ill-suited to the manufacture of other three-dimensional shapes.

Other three-dimensional shapes have been considered, such as those described in GB 2 408 252, which discloses the preamble of claim 1 and which are manufactured by forming porous webs into three-dimensional shapes via the application of heat and/or moisture. The packages are made from webs of conventional infusion packet material, and the resulting packages are said to inherently have some folding, pleating and gathering of the web material, e.g. at the base of the shape being formed. Therefore, some areas in the package are not porous and/or have a tendency to trap the infusible material. This can limit the infusion performance of such packages, as well as being visually unappealing to consumers.

Therefore, there remains scope for improvements regarding the design and manufacture of three-dimensional infusion packets.

### SUMMARY OF THE INVENTION

Known thermoforming processes (e.g. for producing capsules) are capable of forming thermoplastic material into a variety of three-dimensional shapes. However, materials conventionally used to manufacture infusion packets are often not suitable for thermoforming. Firstly, infusion packets are commonly made of paper, which is not thermoformable. Secondly, even if they are made from a thermoformable material, the porosity and thinness of the material makes thermoforming a challenge.

In order to thermoform a material, it is necessary to heat the material to a temperature which is sufficient to allow the thermoplastic material to deform under thermoforming stresses. Very thin material is liable to tear under the stresses applied, particularly when being formed into a three-dimensional shape comprising sharp features. There is also the possibility that the thermoforming process will increase the size of the perforations and/or holes in the material to such an extent that fine particles of infusible material will leak out of the packet. On the other hand, it is important that heating the material does not close the perforations in the material, since this would reduce the porosity of the infusion packet.

Thus it would seem that thermoforming is not a practical method of generating infusion packets. However, the inventors have overcome these barriers by using a non-conventional material as the substrate for thermoforming.

Thus in a first aspect, the present invention relates to a process for the manufacture of infusion packets, the process comprising:
(a) providing a first sheet of thermoplastic material which is porous or non-porous;
(b) thermoforming portions of the first sheet into a three-dimensional shape;
(c) providing a second sheet of material;
(d) dosing an infusible substance into the thermoformed portions of the first sheet or onto the second sheet;
(e) sealing the first and second sheets together to form pockets containing the infusible substance such that each pocket includes at least one thermoformed portion of the first sheet;
(f) severing the pockets at the seals to form infusion packets each having a chamber containing the infusible substance,
wherein thermoformed portions of the first sheet are porous,
characterised in that the first sheet is a polymer film with at least one embossed surface.

The process involves thermoforming a thermoplastic polymer film with at least one embossed surface. This type of thermoplastic material is not conventionally used in the manufacture of infusion packets. Indeed, the first sheet does not need be porous prior to being thermoformed (although the thermoformed portions of the first sheet are porous, i.e. permeable to aqueous liquids). By using this non-conventional material, it has been possible to develop a process which uses thermoforming to manufacture infusion packets having a wide variety of three-dimensional shapes.

The inventors believe that this is the first time that anyone has recognised the possibility of using thermoforming to manufacture infusion packets with three-dimensional shapes from this material.

Thus in a second aspect, the invention relates to an infusion packet comprising a chamber that contains an infusible substance, wherein the packet comprises a first sheet that has been formed into a three-dimensional shape by thermoforming a thermoplastic polymer film having at least one embossed surface such that the thermoformed thermoplastic polymer film is porous, and a second sheet sealed with the first sheet to form the container.

### DETAILED DESCRIPTION

In a first aspect, the present invention relates to a process for the manufacture of infusion packets.

This process involves a first step in which a first sheet of thermoplastic material is provided. The first sheet of thermoplastic material may or may not be porous. In a second step, portions of this sheet are thermoformed into a predetermined three-dimensional shape (i.e. a shape having length, breadth and depth). The thermoformed portions of the first sheet are porous (i.e. permeable to aqueous liquids).

A variety of three-dimensional shapes are possible. For example, tetrahedral or hemispherical shapes and the like are possible. Hemispherical shapes are particularly preferred.

The first sheet of thermoplastic material is a polymer film with at least one embossed surface. In certain embodiments the embossed film may be embossed on both surfaces. This first sheet need not be porous prior to being thermoformed. During thermoforming, portions of the first sheet (i.e. the portions being formed into three-dimensional shapes) experience stresses. These stresses are sufficient to introduce holes in the embossed polymer film. This allows the manufacture of a porous infusion packet from a non-porous material. Furthermore, since the holes are formed during the thermoforming process, this sheet can be stretched further than an equivalent porous sheet whilst ensuring that the holes present in the final packet are sufficiently small to minimise sift of the infusible material. Since the application of the thermoformed material is as infusion packets, the thermoformed thermoplastic material is permeable to aqueous liquids. More precisely, the thermoformed portions of the thermoplastic material are porous.

The polymer film preferably comprises polypropylene, polyethylene, or copolymers thereof. High-density polyethylene is particularly preferred.

The embossed surface preferably comprises small raised solid bosses (i.e. raised figures) arranged with spaces between adjacent bosses in longitudinal and transverse rows. Preferably the bosses in each longitudinal row are in staggered arrangement with the bosses in each adjacent row. The shape of the bosses is not critical, although in a particularly preferred embodiment the bosses are hexagonal in shape.

Preferably the embossed surface of the polymer film has a regular pattern of bosses. It is particularly preferred that the bosses are regularly spaced in longitudinal and transverse rows. In certain embodiments, the bosses are regularly spaced in mutually perpendicular rows.

Prior to thermoforming, the embossed surface of the polymer film preferably has at least 60 bosses per 25 mm, more preferably at least 80 bosses per 25 mm, most preferably at least 100 bosses per 25 mm.

The embossed polymer film can be produced by extruding polymer film, usually as a molten film, into the nip between two suitable rollers. Embossing is achieved by passing the polymer film between pair of rollers wherein at least one of the pair is engraved. The engraving pattern determines the shape and spacing of the bosses on the embossed surface of the film. In order to produce a polymer film which is embossed on both surfaces, the polymer film is passed between a pair of rollers wherein both of the rollers are engraved.

As set out above, it is not necessary for the embossed polymer film to be porous prior to thermoforming. However, in certain embodiments the embossed polymer film is porous prior to thermoforming. This can be achieved by simultaneous or sequential stressing of the embossed film in two directions in the plane of the film. For example, this type of porous material can be produced as described in GB 914,489, GB 1,055,963 and GB 1,106,254.

In a third step of the process, a second sheet of material is provided. This second sheet of material need not be the same material as the first sheet. In fact the second sheet of material need not be thermoformable, and as such can be a material conventionally used for the manufacture of infusion packets. In order to facilitate manufacture of the final infusion packet it is preferred that the second sheet of material is heat-sealable. In particular, it is preferred that the second sheet of material is a sheet of thermoplastic material. Suitable examples include polyethylene terephthalate (PET) and poly lactic acid (PLA).

In one preferred embodiment the second sheet of material is also a polymer film with at least one embossed surface. This permits thermoforming of portions of the second sheet. In this embodiment, the second sheet of material may be porous or non-porous prior to being thermoformed. The thermoformed portions of the second sheet are preferably porous.

In a fourth step, the process involves dosing an infusible substance. The infusible substance can be dosed into the thermoformed portion of the first sheet or onto the second sheet. For convenience of manufacture, it is preferred that the infusible material is dosed into the thermoformed portion of the first sheet.

Preferred examples of infusible substances are tea plant material, herb plant material, fruit pieces and/or flower material (e.g. petals). The term "tea plant material" refers to leaf and/or stem material from *Camellia sinensis* var. *sinensis* or *Camellia sinensis* var. *assamica.* It also includes rooibos obtained from *Aspalathus linearis,* as well as the product obtained by blending any of these tea plant materials. The leaf material may be fermented (i.e. black tea), partially fermented (i.e. oolong tea), or substantially unfermented (i.e. green tea).

In a fifth step, the first and second sheets are sealed together to form pockets. The pockets contain the infusible substance. Each pocket includes at least one thermoformed portion of the first sheet. The first and second sheets can be conveniently sealed together around the perimeter of the thermoformed portion of the first sheet.

As mentioned above, the second sheet need not be thermoformed. Therefore, in one preferred embodiment the pockets comprise a thermoformed portion of the first sheet sealed together with a non-thermoformed portion of the second sheet (i.e. the portion of the second sheet is essentially flat).

In embodiments where portions of the second sheet have also been thermoformed, it is preferred that each pocket includes a thermoformed portion of the first sheet and a thermoformed portion of the second sheet. Once again, the first and second sheets can be conveniently sealed together around the perimeter of the thermoformed portions.

Sealing may be achieved by any suitable method known in the art. Since the process necessarily involves thermoplastic material heat-sealing is particularly preferred. Alternatively, sealing the first and second sheets together may be achieved by other methods. For example, ultrasonic sealing allows the seal to be very narrow, which can improve the appearance of the infusion packet.

A sixth step of the process involves severing the pockets at the seals to form infusion packets. Each infusion packet has a chamber containing the infusible substance. It should be noted that this step is not necessarily performed subsequently to the fifth step of sealing, and in a preferred embodiment, the sealing and severing steps of the process can be performed simultaneously.

As the thermoformed portions of the sheet form part of an infusion packet, typically the sheet of thermoplastic material will be very thin. Prior to being thermoformed, it is preferred that the sheet of thermoplastic material has an average thickness of less than 1.0 mm, more preferably less than 0.5 mm, still more preferably less than 0.2 mm, most preferably from 0.01 to 0.1 mm.

The thermoforming may be carried out by any suitable means known in the art. However, since the infusion packet produced by the process is porous, it is impractical to use air pressure to thermoform the sheet of thermoplastic material. Therefore, it is preferred that the sheet is thermoformed using a mould, more preferably by pressing a male former into the sheet.

As the sheet of thermoplastic material is relatively thin, with a low capacity to store heat, it is preferred to heat the mould rather than the material.

In a preferred embodiment, thermoforming comprises the steps of bringing portions of the sheet of thermoplastic material at a temperature below that required for thermoforming into contact with a mould at a temperature above that of a thermoforming temperature of the thermoplastic material, pressing the mould into contact with the thermoplastic material, the contact between mould and thermoplastic material causing heat to transfer from the mould to the thermoplastic material and raising the thermoplastic material to a thermoformable temperature; such pressing causing thermoforming of the thermoplastic material to conform to the shape of the mould.

Thus no heating of the thermoplastic material is carried out until thermoforming begins. As the thermoplastic material has a low capacity to store heat, it will rapidly heat up once it comes into contact with the heated mould. Thus this method takes the potential disadvantage of low heat capacity and utilises this feature, resulting in effective thermoforming of the thermoplastic material.

The temperature of thermoforming is sufficient to allow the thermoplastic material to deform under thermoforming stresses. Therefore, the temperature of the mould is preferably at least 60°C, more preferably at least 70°C. In order to ensure that the infusion packets produced by this process are porous, the thermoplastic material should not be exposed to temperatures which cause the perforations to close. Thus the temperature of the mould is preferably less than 150°C, more preferably less than 125°C, most preferably less than 100°C.

In a second aspect, the invention relates to an infusion packet comprising a chamber that contains an infusible substance, wherein the packet comprises a first sheet that has been formed into a three-dimensional shape by thermoforming a thermoplastic polymer film having at least one embossed surface such that the thermoformed thermoplastic polymer film is porous, and a second sheet sealed with the first sheet to form the chamber.

It will be appreciated that such an infusion packet can be manufactured by the process of the invention.

The invention will now be illustrated by way of example and with reference to the following figures, in which:
Figure 1 is a schematic representation of an embodiment of an apparatus that is suitable for carrying out a process according to the present invention; and
Figure 2 is a schematic representation of the apparatus shown in Figure 1 during execution of a process according to the present invention.

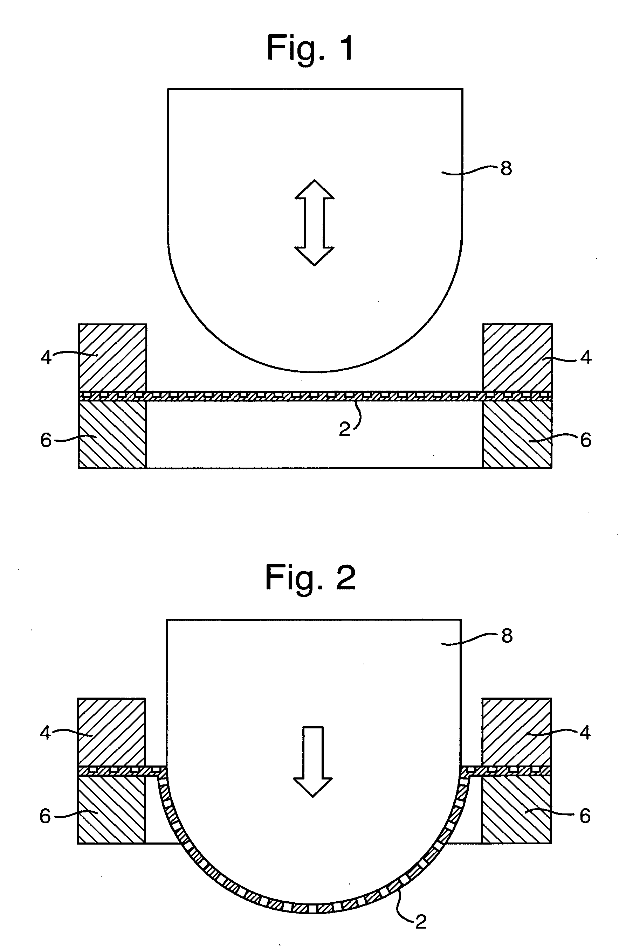

Figure 1 shows a first sheet of thermoplastic material 2. The thermoplastic material is a film of high-density polyethylene which is embossed on one surface. The embossed film has 60 features per 25 mm.

The film is clamped in place by upper clamps 4 and lower clamps 6. The film is at ambient temperature.

Positioned above the embossed film is a male former 8, at a temperature of 70°C.

In use, the male former 8 moves downwards to come into contact with the first sheet 2. As it makes contact, the portion of the first sheet 2 that comes into contact with the male former 8 rapidly heats up to 70°C.

The male former 8 continues to move downwards, heating and thermoforming the first sheet 2 simultaneously, until the male former 8 is in the position shown in Figure 2.

During thermoforming, portions of the embossed polymer file (i.e. those in contact with the male former) experience stresses. These stresses are sufficient to introduce holes in the embossed polymer film.

Once the first sheet 2 is fully thermoformed, the male former 8 retracts and the first sheet 2 rapidly cools and sets. The formed portions of the first sheet are now porous, and hence permeable to aqueous liquids, due to the holes introduced during thermoforming.

An infusible substance can subsequently be dosed into the thermoformed portion of the first sheet, and a second sheet of material used to seal the infusible material within a chamber. This second sheet can be a substantially planar sheet of material, or alternatively the second sheet can also have been thermoformed.

As used herein the term "comprising" encompasses the terms "consisting essentially of" and "consisting of". It should be noted that in specifying any range of values or amounts, any particular upper value or amount can be associated with any particular lower value or amount. The disclosure of the invention as found herein is to be considered to cover all embodiments as found in the following claims. Unless defined otherwise, all technical and scientific terms used herein have the same meaning as commonly understood by one of ordinary skill in the art in the relevant field.

## Claims

1. A process for the manufacture of infusion packets, the process comprising:
(a) providing a first sheet of thermoplastic material (2) which is porous or non-porous;
(b) thermoforming portions of the first sheet into a three-dimensional shape;
(c) providing a second sheet of material;
(d) dosing an infusible substance into the thermoformed portions of the first sheet or onto the second sheet;
(e) sealing the first and second sheets together to form pockets containing the infusible substance such that each pocket includes at least one thermoformed portion of the first sheet;
(f) severing the pockets at the seals to form infusion packets each having a chamber containing the infusible substance,
wherein the thermoformed portions of the first sheet are porous,
**characterised in that** the first sheet is a polymer film with at least one embossed surface.

2. A process as claimed in claim 1 wherein the second sheet is a sheet of thermoplastic material.

3. A process as claimed in claim 2 wherein portions of the second sheet are thermoformed into a three-dimensional shape.

4. A process as claimed in-claim 3 wherein the second sheet is a polymer film with at least one embossed surface.

5. A process as claimed in claim 3 or claim 4 wherein each pocket includes a thermoformed portion of the first sheet and a thermoformed portion of the second sheet.

6. A process as claimed in any one of the preceding claims wherein at least one of the embossed polymer films is made porous prior to thermoforming by simultaneous or sequential stressing of the embossed film in two directions in the plane of the film.

7. A process as claimed in any one of the preceding claims wherein the first and/or the second polymer film comprises polyethylene, preferably high-density polyethylene.

8. A process as claimed in any one of the preceding claims wherein the at least one embossed surface of the first and/or the second polymer film has a regular pattern of bosses.

9. A process as claimed in any one of the preceding claims wherein prior to thermoforming the at least one embossed surface of the first and/or the second polymer film has at least 60 features per 25 mm, preferably at least 80 features per 25 mm.

10. A process as claimed in any one of the preceding claims wherein the three-dimensional shape is a hemispherical shape.

11. A process as claimed in any one of the preceding claims wherein each sheet of thermoplastic material has an average thickness of less than 1.0 mm, preferably of less than 0.5 mm.

12. A process as claimed in any one of the preceding claims wherein thermoforming comprises the steps of bringing portions of the sheet of thermoplastic material at a temperature below that required for thermoforming into contact with a mould at a temperature above that of the thermoforming temperature of the thermoplastic material, pressing the mould into contact with the thermoplastic material, the contact between mould and thermoplastic material causing heat to transfer from the mould to the thermoplastic material and raising the thermoplastic material to a thermoformable temperature; such pressing causing thermoforming of the thermoplastic material to conform to the shape of the mould.

13. A process as claimed in claim 12 wherein the temperature of the mould is at least 60°C, more preferably at least 70°C.

14. An infusion packet comprising a chamber that contains an infusible substance, wherein the packet comprises a first sheet (2) that has been formed into a three-dimensional shape by thermoforming a thermoplastic polymer film having at least one embossed surface such that the thermoformed thermoplastic polymer film is porous, and a second sheet sealed with the first sheet to form the chamber.

15. An infusion packet as claimed in claim 14 wherein the thermoplastic polymer film comprises polyethylene, preferably high-density polyethylene.

## Patentansprüche

1. Verfahren für die Herstellung von Infusionspackungen, wobei das Verfahren umfasst:
(a) Vorsehen einer ersten Lage aus thermoplastischem Material (2), das porös oder nicht porös ist;
(b) Thermoformen von Abschnitten der ersten Lage in eine dreidimensionale Form;
(c) Vorsehen einer zweiten Materiallage;
(d) Dosieren einer für eine Infusion geeigneten Substanz in die thermogeformten Abschnitte der ersten Lage oder auf die zweite Lage;
(e) Versiegeln der ersten und der zweiten Lagen aneinander, um Taschen zu bilden, die die für eine Infusion geeignete Substanz enthalten, so dass jede Tasche wenigstens einen thermogeformten Abschnitt der ersten Lage enthält;
(f) Durchtrennen der Taschen an den Versiegelungen, um Infusionspackungen zu bilden, wovon jede eine Kammer besitzt, die die für eine Infusion geeignete Substanz enthält,
wobei die thermogeformten Abschnitte der ersten Lage porös sind, **dadurch gekennzeichnet, dass** die erste Lage eine dünne Polymerschicht mit wenigstens einer geprägten Oberfläche ist.

2. Verfahren nach Anspruch 1, wobei die zweite Lage eine Lage aus thermoplastischem Material ist.

3. Verfahren nach Anspruch 2, wobei Abschnitte der zweiten Lage in eine dreidimensionale Form thermogeformt sind.

4. Verfahren nach Anspruch 3, wobei die zweite Lage eine dünne Polymerschicht mit wenigstens einer geprägten Oberfläche ist.

5. Verfahren nach Anspruch 3 oder Anspruch 4, wobei jede Tasche einen thermogeformten Abschnitt der ersten Lage und einen thermogeformten Abschnitt der zweiten Lage umfasst.

6. Verfahren nach einem der vorhergehenden Ansprüche, wobei wenigstens eine der geprägten dünnen Polymerschichten vor dem Thermoformen durch gleichzeitiges oder aufeinander folgendes Spannen der dünnen geprägten Schicht in zwei Richtungen in der Ebene der dünnen Schicht porös gemacht wird.

7. Verfahren nach einem der vorhergehenden Ansprüche, wobei die erste und/oder die zweite dünne Polymerschicht Polyethylen, vorzugsweise hochdichtes Polyethylen, umfassen.

8. Verfahren nach einem der vorhergehenden Ansprüche, wobei die wenigstens eine geprägte Oberfläche der ersten und/oder der zweiten dünnen Polymerschicht ein regelmäßiges Muster von Erhebungen hat.

9. Verfahren nach einem der vorhergehenden Ansprüche, wobei die wenigstens eine geprägte Oberfläche der ersten und/oder der zweiten dünnen Polymerschicht vor dem Thermoformen wenigstens 60 Merkmale pro 25 mm und vorzugsweise wenigstens 80 Merkmale pro 25 mm besitzt.

10. Verfahren nach einem der vorhergehenden Ansprüche, wobei die dreidimensionale Form eine Halbkugelform ist.

11. Verfahren nach einem der vorhergehenden Ansprüche, wobei jede Lage aus thermoplastischem Material eine mittlere Dicke von weniger als 1,0 mm und vorzugsweise weniger als 0,5 mm besitzt.

12. Verfahren nach einem der vorhergehenden Ansprüche, wobei das Thermoformen die Schritte des Bringens von Abschnitten der Lage aus thermoplastischem Material, die eine Temperatur unterhalb jener haben, die für die Thermoformung erforderlich ist, in Kontakt mit einem Formwerkzeug, das eine Temperatur oberhalb der Thermoformungstemperatur des thermoplastischen Materials hat, des Pressens des Formwerkzeugs in Kontakt mit dem thermoplastischen Material, wobei der Kontakt zwischen dem Formwerkzeug und dem thermoplastischen Material bewirkt, dass Wärme von dem Formwerkzeug an das thermoplastische Material übertragen wird, und des Erhöhens der Temperatur des thermoplastischen Materials auf eine Thermoformungstemperatur; derart, dass das Pressen ein Thermoformen des thermoplastischen Materials bewirkt, damit es mit der Form des Formwerkzeugs übereinstimmt.

13. Verfahren nach Anspruch 12, wobei die Temperatur des Formwerkzeugs wenigstens 60 °C und vorzugsweise wenigstens 70 °C beträgt.

14. Infusionspackung, die ein Kammer umfasst, die eine für eine Infusion geeignete Substanz enthält, wobei die Packung eine erste Lage (2), die durch Thermoformen einer thermoplastischen dünnen Polymerschicht, die wenigstens eine geprägte Oberfläche besitzt, derart, dass die thermogeformte thermoplastische dünne Polymerschicht porös ist, in eine dreidimensionale Form gebracht worden ist, und eine zweite Lage, die mit der ersten Lage versiegelt ist, um die Kammer zu bilden, umfasst.

15. Infusionspackung nach Anspruch 14, wobei die thermoplastische dünne Polymerschicht Polyethylen und vorzugsweise hochdichtes Polyethylen umfasst.

## Revendications

1. Processus pour la fabrication de paquets d'infusion, le processus comprenant :
(a) la fourniture d'une première feuille de matériau thermoplastique (2) qui est poreuse ou non poreuse ;
(b) le thermoformage de parties de la première feuille en une forme tridimensionnelle ;
(c) la fourniture d'une deuxième feuille de matériau ;
(d) le dosage d'une substance pouvant être infusée dans les parties thermoformées de la première feuille ou sur la deuxième feuille ;
(e) le scellage des première et deuxième feuilles l'une avec l'autre pour former des poches contenant la substance pouvant être infusée de sorte que chaque poche comprenne au moins une partie thermoformée de la première feuille ;
(f) la découpe des poches au niveau des joints pour former des paquets d'infusion comportant chacun une chambre contenant la substance pouvant être infusée,
dans lequel les parties thermoformées de la première feuille sont poreuses,
**caractérisé en ce que** la première feuille est un film de polymère avec au moins une surface gaufrée.

2. Processus selon la revendication 1, dans lequel la deuxième feuille est une feuille de matériau thermoplastique.

3. Processus selon la revendication 2, dans lequel des parties de la deuxième feuille sont thermoformées en une forme tridimensionnelle.

4. Processus selon la revendication 3, dans lequel la deuxième feuille est un film de polymère avec au moins une surface gaufrée.

5. Processus selon la revendication 3 ou la revendication 4, dans lequel chaque poche comprend une partie thermoformée de la première feuille et une partie thermoformée de la deuxième feuille.

6. Processus selon l'une quelconque des revendications précédentes, dans lequel au moins l'un des films de polymère gaufrés est rendu poreux avant le thermoformage par l'application de contraintes simultanées ou séquentielles au film gaufré dans deux directions dans le plan du film.

7. Processus selon l'une quelconque des revendications précédentes, dans lequel les premier et/ou deuxième films de polymère comprennent du polyéthylène, de préférence du polyéthylène à haute densité.

8. Processus selon l'une quelconque des revendications précédentes, dans lequel ladite au moins une surface gaufrée des premier et/ou deuxième films de polymère comporte un motif régulier de bosses.

9. Processus selon l'une quelconque des revendications précédentes, dans lequel, avant le thermoformage, ladite au moins une surface gaufrée des premier et/ou deuxième films de polymère comporte au moins 60 caractéristiques par 25 mm, de préférence au moins 80 caractéristiques par 25 mm.

10. Processus selon l'une quelconque des revendications précédentes, dans lequel la forme tridimensionnelle est une forme hémisphérique.

11. Processus selon l'une quelconque des revendications précédentes, dans lequel chaque feuille de matériau thermoplastique a une épaisseur moyenne inférieure à 1,0 mm, de préférence inférieure à 0,5 mm.

12. Processus selon l'une quelconque des revendications précédentes, dans lequel le thermoformage comprend les étapes pour amener des parties de la feuille de matériau thermoplastique qui sont à une température inférieure à celle nécessaire pour le thermoformage en contact avec un moule qui est à une température supérieure à la température de thermoformage du matériau thermoplastique, pour presser le moule en contact avec le matériau thermoplastique, le contact entre le moule et le matériau thermoplastique provoquant un transfert de chaleur du moule au matériau thermoplastique et amenant le matériau thermoplastique à une température de thermoformage ; cette pression provoquant le thermoformage du matériau thermoplastique de manière à ce qu'il se conforme à la forme du moule.

13. Processus selon la revendication 12, dans lequel la température du moule est au moins égale à 60 °C, plus préférablement à au moins 70 °C.

14. Paquet d'infusion comprenant une chambre qui contient une substance pouvant être infusée, dans lequel le paquet comprend une première feuille (2) qui a été mise en une forme tridimensionnelle par le thermoformage d'un film de polymère thermoplastique comportant au moins une surface gaufrée de sorte que le film de polymère thermoplastique thermoformé soit poreux, et une deuxième feuille scellée avec la première feuille pour former la chambre.

15. Paquet d'infusion selon la revendication 14, dans lequel le film de polymère thermoplastique comprend du polyéthylène, de préférence du polyéthylène à haute densité.
